# EUROPÄISCHE PATENTSCHRIFT

(11) **EP 1 782 107 B1**
(45) Veröffentlichungstag und Bekanntmachung des Hinweises auf die Patenterteilung: **12.10.2011**
(21) Anmeldenummer: 05776956.4
(22) Anmeldetag: 06.08.2005
(51) Int. Cl.: G02B 3/00

(54) **VORRICHTUNG ZUR HOMOGENISIERUNG VON LICHT SOWIE VERFAHREN ZUR HERSTELLUNG DER VORRICHTUNG**
DEVICE FOR HOMOGENIZING LIGHT AND METHOD FOR THE PRODUCTION OF SAID DEVICE
DISPOSITIF D'HOMOGENEISATION DE LUMIERE ET SON PROCEDE DE PRODUCTION

(30) Priorität: 17.08.2004 DE 102004039936
(43) Veröffentlichungstag der Anmeldung: 09.05.2007
(73) Patentinhaber: LIMO Patentverwaltung GmbH & Co. KG, 36419 Gerstengrund (DE)
(72) Erfinder: LISSOTSCHENKO, Vitalij, 58730 Fröndenberg (DE)
(74) Vertreter: Basfeld, Rainer
(86) Internationale Anmeldenummer: PCT/EP2005/008556
(87) Internationale Veröffentlichungsnummer: WO 2006/018167

(56) Entgegenhaltungen:
- EP-A- 1 396 735
- DE-A1- 10 139 355
- DE-A1- 10 225 674
- US-A- 6 014 260
- PATENT ABSTRACTS OF JAPAN Bd. 018, Nr. 412 (P-1780), 2. August 1994 (1994-08-02) -& JP 06 123921 A (DAINIPPON PRINTING CO LTD), 6. Mai 1994 (1994-05-06)
- PATENT ABSTRACTS OF JAPAN Bd. 1995, Nr. 03, 28. April 1995 (1995-04-28) -& JP 06 342187 A (KURARAY CO LTD), 13. Dezember 1994 (1994-12-13)
- PATENT ABSTRACTS OF JAPAN Bd. 013, Nr. 583 (P-981), 22. Dezember 1989 (1989-12-22) -& JP 01 245235 A (MITSUBISHI RAYON CO LTD), 29. September 1989 (1989-09-29)
- PATENT ABSTRACTS OF JAPAN Bd. 013, Nr. 438 (P-939), 3. Oktober 1989 (1989-10-03) -& JP 01 167803 A (MEIKO DENSHI KOGYO KK), 3. Juli 1989 (1989-07-03)

## Beschreibung

Die vorliegende Erfindung betrifft ein Verfahren gemäß dem Oberbegriff des Anspruchs 1 sowie eine Vorrichtung gemäß dem Oberbegriff des Anspruchs 11.

Ein Verfahren und eine Vorrichtung der vorgenannten Art sind aus der EP 1 396 735 A1 bekannt. Bei dem darin beschriebenen Verfahren wird ein Block eines transparenten Ausgangsmaterials derart geformt, dass auf zwei gegenüberliegenden Seiten jeweils eine Mehrzahl von zueinander parallelen konvexen zylindrischen Strukturen entsteht. Dieser Block wird erhitzt und gezogen, so dass ein langer dünner Strang mit beidseitigen zylindrischen Strukturen entsteht, deren Zylinderachsen parallel zur Längserstreckung des Strangs ausgerichtet sind. Dieser Strang wird senkrecht zur Längserstreckung in einzelne Stücke geteilt. Diese Stücke werden seitlich beschnitten und in einer Orientierung senkrecht zu den Zylinderachsen aneinander geklebt.

Die JP 06 342187 A beschreibt ein Verfahren zur Herstellung eines großen Zylinderlinsenarrays aus einzelnen Zylinderlinsenarrays. Dabei werden die einzelnen Zylinderlinsenarrays an den Verbindungsstellen zwischen einzelnen Zylinderlinsen derart abgeschnitten, dass der Abstand von der Schnittfläche zur nächsten Verbindungsstelle zwischen den einzelnen Zylinderlinsen genau dem Abstand zweier Verbindungsstellen zwischen einzelnen Zylinderlinsen beziehungsweise genau dem Pitch der Zylinderlinsen entspricht. Daran anschließend werden die einzelnen Zylinderlinsenarrays mit den Schnittflächen geeignet miteinander verbunden beziehungsweise aneinander geklebt.

Die JP 06 342187 A beschreibt ebenfalls ein Verfahren zur Herstellung eines großen Zylinderlinsenarrays aus einzelnen Zylinderlinsenarrays. Dabei entspricht die Verbindungsfläche zwischen den einzelnen Zylinderlinsenarrays einer sich schräg durch das Substrat erstreckenden Fläche, die von einer Verbindungsstelle zwischen einzelnen Zylinderlinsen auf der Lichteintrittsseite ausgeht. Bei dem Zusammenfügen können die miteinander zu verbindenden Zylinderlinsenarrays längs der schrägen Verbindungsfläche ein wenig gegeneinander verschoben werden, so dass trotz eventuell dick auftragender Klebstoffe der Pitch der einzelnen Linsen auch im miteinander verbundenen Zustand der einzelnen Zylinderlinsenarrays gewahrt bleibt.

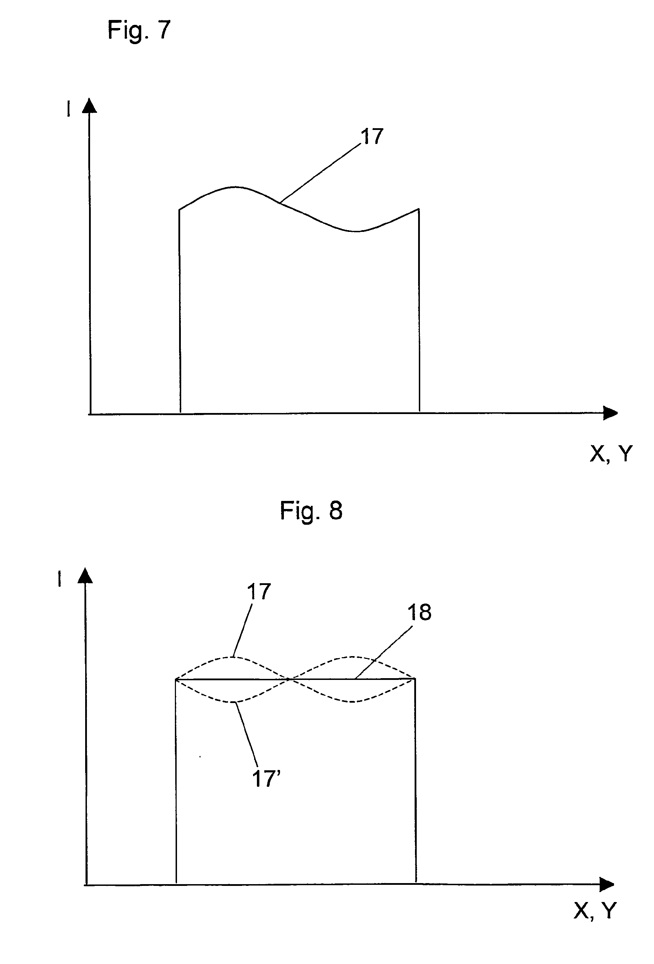

Eine weitere Vorrichtung zur Homogenisierung von Licht sowie ein weiteres Verfahren zur Herstellung einer derartigen Vorrichtung sind aus der DE 101 39 355 A1 bekannt. Als nachteilig bei derartigen Vorrichtungen erweist sich, dass die Oberflächen der Linsenelemente eine Oberflächenrauhigkeit aufweisen, die für bestimmte Anwendungen, beispielsweise für lithographische Anwendungen im Rahmen der Chip-Herstellung zu groß ist. Insbesondere weisen zumeist derartige Linsenelemente systematische Oberflächenunregelmäßigkeiten auf, die sich auf einem jeden dieser Linsenelemente wieder finden. Diese Oberflächenrauhigkeiten oder Oberflächenunregelmäßigkeiten können dabei dazu führen, dass die tatsächliche Oberflächengestalt von der gewünschten berechneten Oberfläche um einige zehn Nanometer oder mehr abweicht. Aufgrund der Tatsache, dass bei derartigen Homogenisierungsvorrichtungen in der Regel das Licht, das durch die einzelnen Linsenelemente hindurchtritt, in einer Arbeitsebene überlagert wird, werden auch die durch die Oberflächenunregelmäßigkeiten hervorgerufenen Störungen der Intensitätsverteilungen in der Arbeitsebene aufaddiert. Zumeist werden bei Homogenisierungsvorrichtungen der vorgenannten Art die durch einzelne der Linsenelemente hindurchgetretenen Teilstrahlen derart in der Arbeitsebene überlagert, dass gleiche Orte der einzelnen Linsenelemente zu demselben Ort in der Arbeitsebene beitragen. Dadurch wird durch die Überlagerung des durch die einzelnen Linsenelemente hindurchgetretenen Lichtes in der Arbeitsebene eine systematische, bei allen Linsenelementen wiederkehrende Unregelmäßigkeit nicht herausgemittelt. Vielmehr ergibt sich eine Intensitätsverteilung des homogenisierten Lichtes in der Arbeitsebene, wie sie beispielsweise schematisch und übertrieben dargestellt in Fig. 7 abgebildet ist.

Das der vorliegenden Erfindung zugrunde liegende Problem ist die Schaffung einer Vorrichtung der eingangs genannten Art, mittels der Licht effektiver homogenisiert werden kann. Weiterhin soll ein Verfahren zur Herstellung einer derartigen Vorrichtung angegeben werden.

Dies wird hinsichtlich des Verfahrens durch ein Verfahren der eingangs genannten Art mit den kennzeichnenden Merkmalen des Anspruchs 1 sowie hinsichtlich der Vorrichtung durch eine Vorrichtung der eingangs genannten Art mit den kennzeichnenden Merkmalen des Anspruchs 11 erreicht. Die Unteransprüche betreffen bevorzugte Weiterbildungen der Erfindung.

Durch die andere Ausrichtung mindestens eines der mindestens zwei Teile kann verhindert werden, dass sich die durch die systematischen Unregelmäßigkeiten der Oberfläche hervorgerufenen Abweichungen des Lichtes nach Hindurchtritt durch die einzelnen Linsenelemente der Teile addieren.

Beispielsweise kann gemäß Anspruch 2 nach dem Zerteilen mindestens eines der Teile gedreht werden, bevor es mit dem mindestens einen anderen Teil zusammengefügt wird. Hierbei kann beispielsweise gemäß Anspruch 3 die Drehung eine Drehung um 180° sein. Durch eine derartige Drehung wird somit unter Umständen der Effekt der durch die systematischen Unregelmäßigkeiten des gedrehten Teiles hervorgerufen wird, genau umgekehrt, so dass er sich mit dem Effekt der bei dem Hindurchtritt des Lichtes durch das mindestens eine andere der mindestens zwei Teile hervorgerufen wird, aufhebt. Auf diese Weise besteht die Möglichkeit, eine sehr homogene Intensitätsverteilung in einer Arbeitsebene zu erzielen.

Gemäß Anspruch 4 kann dabei die Drehung um eine Achse erfolgen, die parallel zur mittleren Ausbreitungsrichtung des zu homogenisierenden Lichtes ist.

Gemäß Anspruch 5 besteht die Möglichkeit, dass das mindestens eine Substrat in mehr als zwei Teile, insbesondere in vier Teile oder in acht Teile oder sechzehn Teile oder aber auch in eine nicht einer Potenz von zwei entsprechenden Anzahl von Teilen aufgeteilt wird. Je inhomogener das auf die Homogenisierungsvorrichtung auftretende Licht ist, desto wahrscheinlicher ist es, dass das Substrat in eine größere Anzahl von Teilen zerlegt werden muss, wobei dann einzelne dieser Teile mit einer anderen Ausrichtung wieder in das zusammenzufügende Substrat eingebracht werden müssen, beziehungsweise einzelne dieser Teile gedreht werden müssen. Durch eine große Anzahl von anders ausgerichteten Teilen kann auch bei einer vergleichsweise großen Eingangsinhomogenität eine effektive Homogenisierung erzielt werden.

Gemäß Anspruch 6 besteht beispielsweise die Möglichkeit, dass das Substrat in streifenförmige Teile aufgeteilt wird, die in einer ersten Richtung weniger Linsenelemente aufweisen als in einer dazu senkrechten zweiten Richtung.

Gemäß Anspruch 7 besteht die Möglichkeit, dass mehrere Substrate in jeweils mindestens zwei Teile aufgeteilt werden und daran anschließend Teile unterschiedlicher Substrate zu einem neuen Substrat zusammengefügt werden. Auf diese Weise besteht die Möglichkeit, gezielt Einfluss auf die Intensitätsverteilung in der Arbeitsebene zu nehmen, weil die unterschiedlichen Substrate unterschiedliche Eigenschaften haben können. Durch eine derartige Maßnahme kann wie mit einem Baukastensystem eine Vorrichtung zur Homogenisierung zusammengebaut werden, die die gewünschten Eigenschaften aufweist.

Insbesondere besteht dabei gemäß Anspruch 8 die Möglichkeit, dass vor dem Zusammenfügen eines Substrates aus Teilen unterschiedlicher Substrate die zu erzielende Intensitätsverteilung in einer Arbeitsebene analysiert wird und die Auswahl und Orientierung der für den Zusammenbau verwendeten Teile auf Basis dieser Analyse ausgewählt wird. Beispielsweise kann dabei die Vorrichtung zur Homogenisierung in eine größere Vorrichtung zur Ausleuchtung einer Arbeitsebene eingefügt werden. In dieser Vorrichtung zur Ausleuchtung einer Arbeitsebene können beispielsweise auch Fourierlinsen hinter dem mindestens einen Substrat angeordnet sein, die zur Überlagerung des durch die einzelnen Linsenelemente hindurchgetretenen Lichtes in der Arbeitsebene beitragen. Weiterhin können darin auch Fokussiermittel vorgesehen sein, die zur Formung des Lichtstrahles oder des Lichtes beitragen. Beispielsweise können von der Vorrichtung zur Beleuchtung einer Arbeitsebene auch Lichtquellen wie beispielsweise ein Excimerlaser oder eine Halbleiterlaservorrichtung umfasst sein. Es besteht dabei die Möglichkeit, dass in eine derartige Vorrichtung ein Rohsubstrat mit Linsenelementen eingebracht wird und die mit diesem Rohsubstrat erzielbare Intensitätsverteilung in der Arbeitsebene aufgenommen wird. Diese mit dem Rohsubstrat erzielte Intensitätsvergleichverteilung kann mit einer gewünschten Intensitätsverteilung verglichen werden, wobei dann auf Basis der vorhandenen Daten über die einzelnen Substrate Teile der einzelnen Substrate wie in einem Puzzel zusammengefügt werden, um die gewünschte Intensitätsverteilung in der Arbeitsebene zu erhalten.

Gemäß Anspruch 11 ist vorgesehen, dass die Vorrichtung durch ein erfindungsgemäßes Verfahren hergestellt ist. Gemäß Anspruch 12 umfasst die Vorrichtung als Zylinderlinsen ausgebildete Linsenelemente. Dabei kann beispielsweise gemäß Anspruch 13 vorgesehen sein, dass das Substrat eine als Eintrittsfläche dienende optisch funktionale Fläche und eine als Austrittsfläche dienende optisch funktionale Fläche aufweist, wobei auf jeder dieser Flächen ein Array von Zylinderlinsen ausgebildet ist und wobei die Zylinderachsen des Arrays auf der Eintrittsfläche senkrecht zu den Zylinderachsen des Arrays auf der Austrittsfläche angeordnet sind. Auf diese Weise kann durch jeweils zwei einander gegenüberliegende gekreuzte Zylinderlinsen eines der Linsenelemente gebildet werden. Derartig gebildete Linsenelemente weisen eine höhere Effektivität hinsichtlich Lichtdurchsatz auf.

Gemäß Anspruch 14 besteht die Möglichkeit, dass die Vorrichtung zwei Substrate mit mindestens zwei, insbesondere vier optisch funktionalen Flächen aufweist, wobei die beiden Substrate in Ausbreitungsrichtung des zu homogenisierenden Lichts beabstandet zueinander und hintereinander angeordnet sind. Durch eine derartige Ausgestaltung der Vorrichtung wird die Homogenisierung des zu homogenisierenden Lichtes weiter verbessert.

Gemäß Anspruch 15 kann vorgesehen sein, dass die Vorrichtung in Ausbreitungsrichtung des zu homogenisierenden Lichts hinter dem mindestens einen Substrat angeordnete als Fourierlinse dienende Linsenmittel aufweist, die das durch einzelne Linsenelemente hindurchgetretene Licht miteinander überlagern können. Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine Draufsicht auf ein Substrat für eine erfindungsgemäße Vorrichtung;
- Fig. 2: eine Draufsicht auf das Substrat nach Zerteilen, Drehen und Zusammensetzen;
- Fig. 3: eine Draufsicht auf das Substrat gemäß Fig. 1 mit anderen Schneideebenen;
- Fig. 4: eine Draufsicht auf das Substrat gemäß Fig. 3 nach dem Zerteilen, Drehen und Zusammensetzen;
- Fig. 5: eine Draufsicht auf das Substrat gemäß Fig. 1 mit anderen Schneideebenen;
- Fig. 6: eine Draufsicht auf das Substrat gemäß Fig. 5 nach Zerteilen, Drehen und Zusammenfügen;
- Fig. 7: eine schematische Ansicht einer Intensitätsverteilung von durch ein Substrat hindurchgetretenem Licht in einer Arbeitsebene;
- Fig. 8: eine Ansicht der Intensitätsverteilung in einer Arbeitsebene der Vorrichtung nach Zerteilen, Drehen und Zusammensetzen des Substrates.

Zur Verdeutlichung ist in einigen Figuren ein kartesisches Koordinatensystem eingezeichnet.

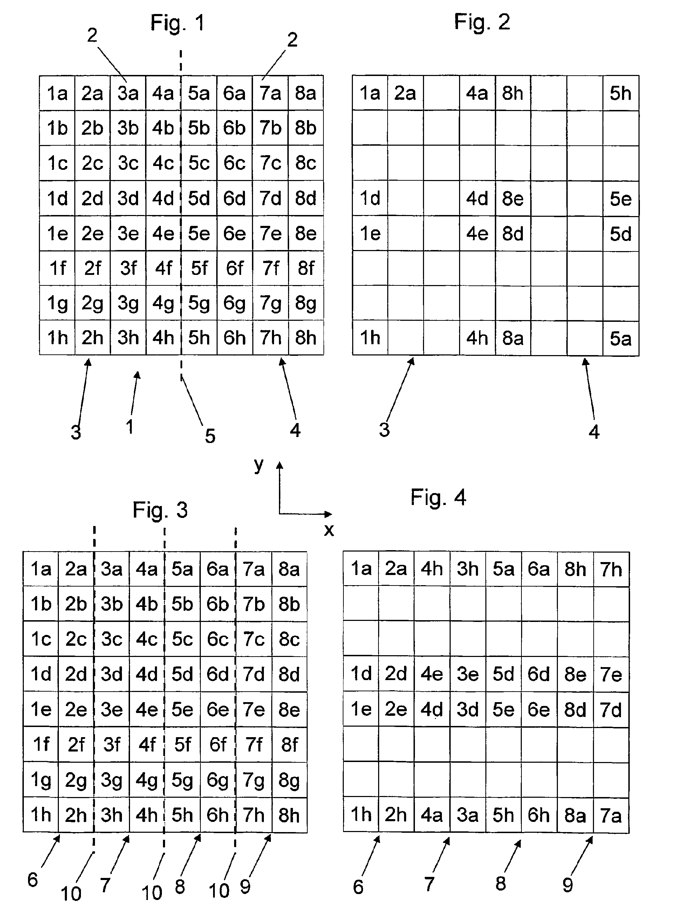

In Fig. 1 ist beispielhaft ein Substrat 1 abgebildet, das eine Anzahl von Linsenelementen 2 aufweist. In dem abgebildeten Ausführungsbeispiel sind vierundsechzig Linsenelemente 2 eingezeichnet, die von 1a bis 8h durchnummeriert sind. Es besteht durchaus die Möglichkeit, mehr oder weniger Linsenelemente vorzusehen. Bei den Linsenelementen 2 kann es sich beispielsweise um sphärische Linsenelemente handeln, die auf einer oder beiden Seiten des Substrates 1 ausgebildet sind. Es besteht aber durchaus auch die Möglichkeit, Zylinderlinsen auf der Vorder- und der Rückseite des Substrates auszubilden, die beispielsweise zueinander gekreuzt sind. In diesem Falle könnten sich beispielsweise auf der Vorderseite die Zylinderlinsen in Y-Richtung, das heißt beispielsweise in Richtung von 1 a bis 1 h erstrecken. Auf der Rückseite des Substrates 1 könnten sich die Zylinderlinsen in X-Richtung, das heißt von 1a bis 8a erstrecken. Durch das zueinander Kreuzen der Zylinderlinsen auf Vorder- und Rückseite könnten ebenfalls die abgebildeten vierundsechzig Linsenelemente 2 entstehen.

Es besteht weiterhin die Möglichkeit, dass eine erfindungsgemäße Vorrichtung mehr als ein Substrat mit jeweils einer oder zwei optisch funktionalen Flächen umfasst. Es besteht also beispielsweise die Möglichkeit, zwei Substrate 1 hintereinander anzuordnen, wobei jedes der Substrate auf ihrer Eintritts- und auf ihrer Austrittsfläche jeweils zueinander gekreuzte Zylinderlinsenarrays umfasst.

Die Linsenelemente können auf dem beispielsweise in Fig. 1 abgebildeten Substrat 1 durch aus dem Stand der Technik bekannte übliche Methoden aufgebracht werden. Beispielsweise kommen hier Formungsschritte für die Einbringung von Stufen und daran anschließend Schmelzschritte zur Glättung der Oberflächen in Betracht. Die Formung kann beispielsweise durch Ätzen oder durch Sputtern vollzogen werden. Das Aufschmelzen kann beispielsweise mittels Elektronenstrahl oder Laserstrahl erfolgen.

Das in Fig. 1 abgebildete Substrat wird in dem erfindungsgemäßen Verfahren längs der sich in einer Y-Z-Ebene erstreckenden Trennebene 5 beispielsweise durch Schneiden in zwei Teile 3, 4 geteilt. Daran anschließend wird der Teil 4 des Substrates 1 um die Z-Richtung, das heißt um die spätere Hindurchtrittsrichtung des zu homogenisierenden Lichts um 180° gedreht. Daran anschließend werden die beiden Teile 3, 4 wieder miteinander verbunden. Dieses miteinander Verbinden kann durch Kleben oder andere geeignete Verbindungsmethoden erzielt werden. Aus Fig. 2 ist das Substrat nach dem Schneiden, Drehen des Teiles 4 und wieder miteinander Verbinden ersichtlich. Es ist deutlich ersichtlich, dass der Teil 4 derart gedreht ist, dass das vorher oben links befindliche Linsenelement 5a nun unten rechts angeordnet ist.

Fig. 3 zeigt dasselbe Substrat 1, das jedoch gemäß einer Variation des erfindungsgemäßen Verfahrens längs dreier in Y-Z-Ebenen angeordneten Schneideebenen 10 in vier Teile 6, 7, 8, 9 aufgeteilt wird. Daran anschließend werden der Teil 7 und der Teil 9 jeweils um die Z-Richtung um 180° gedreht. Aus Fig. 4 ist das Substrat gemäß Fig. 3 nach dem Teilen, Drehen und Zusammenfügen ersichtlich. Es ist deutlich, dass bei dem Teil 7 das vormals oben links angeordnete Element 3a nach dem Zusammenfügen unten rechts angeordnet ist. Gleichermaßen ist bei dem Element 9 das vormals oben links angeordnete Element 7a nunmehr unten rechts angeordnet.

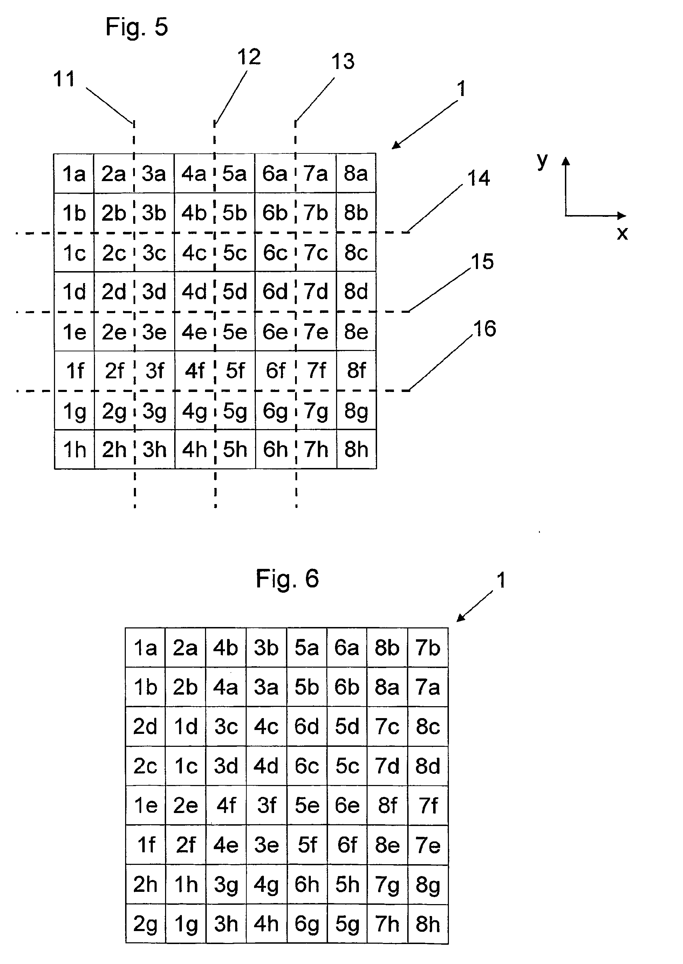

Fig. 5 zeigt das Substrat 1, dass bei einem alternativen Verfahren längs sechs Schneideebenen 11, 12,13, 14, 15, 16 zerteilt werden kann. Dabei sind die Schneideebenen 11, 12, 13 Y-Z-Ebenen, wohingegen die Schneideebenen 14, 15, 16 X-Z-Ebenen sind. Durch das Aufteilen des Substrates 1 längs dieser Schneideebenen 11, 12, 13, 14, 15, 16 ergeben sich sechzehn Teile, die jeweils vier Linsenelemente umfassen.

Fig. 6 zeigt das Substrat 1 nach der Aufteilung gemäß Fig. 5 und dem Drehen eines jeden zweiten der Teile um 180° um die Z-Richtung. Bei der in Fig. 6 abgebildeten Darstellung wurden jeweils die Teile gedreht, die oben links in ihrer Ecke die Linsenelemente 3a, 7a, 1c, 5c, 3e, 7e, 1 g, 5g aufweisen. Es besteht durchaus die Möglichkeit, andere der Linsenelemente zu drehen.

Es besteht erfindungsgemäß durchaus die Möglichkeit, ein Substrat längs anderer Schneide- oder Trennebenen in verschiedene Teile aufzuteilen. Weiterhin besteht die Möglichkeit, ein Substrat in ungleich große Teile aufzuteilen. Es besteht erfindungsgemäß weiterhin die Möglichkeit, eine Vielzahl von Substraten aufgeteilt oder als Ganzes lagermäßig vorzuhalten, so dass nach kundenspezifischen Anforderungen gewünschte Substrate mit gewünschten Intensitätsverteilungen zusammengefügt werden können.

In Fig. 7 ist eine beispielhafte, übertrieben dargestellte Intensitätsverteilung in einer Arbeitsebene des Substrates 1 vor dem Zerteilen, Drehen und Zusammenzufügen abgebildet. Es ist insbesondere ersichtlich, dass die Intensitätsverteilung nicht vollständig homogen ist, sondern in ihrem linken Bereich eine Erhöhung 17 aufweist. Eine derartige Erhöhung 17 kann durch systematische Oberflächenrauhigkeiten der einzelnen Linsenelemente entstehen. Beispielsweise kann es sich hierbei um sehr kleine systematische Oberflächenrauhigkeiten der einzelnen Linsenelemente im Bereich von einigen zehn Nanometern handeln. Die Erfindung geht von der Überlegung aus, das sämtliche der Linsenelemente 2 zu der Lichtverteilung in der Arbeitsebene einen gleichen Beitrag liefern. Insbesondere sind Homogenisiervorrichtungen in der Regel so aufgebaut, dass die durch einzelne Linsenelemente hindurchgetretenen Teilstrahlen des zu homogenisierenden Lichtes in der Arbeitsebene derart überlagern, dass das durch gleiche Abschnitte der einzelnen Linsenelemente 2 hindurchgetretene Licht an der gleichen Stelle zu der Intensitätsverteilung beiträgt.

Aus diesem Grund entspricht die in Fig. 7 abgebildete Intensitätsverteilung in der Arbeitsebene auch der Intensitätsverteilung, die ein einzelnes Linsenelement zu dieser Intensitätsverteilung beiträgt.

Durch die Drehung eines oder mehrerer Teile des Substrates wird somit eine Mehrzahl der Linsenelemente umgedreht. In der Regel wird dabei die Zahl der umgedrehten Linsenelemente 2 genau der Zahl der nicht umgedrehten Linsenelemente 2 entsprechen. Auf diese Weise ergibt sich die aus Fig. 8 ersichtliche Intensitätsverteilung nach dem Zusammenfügen der voneinander getrennten Teile. Die Intensitätsverteilung 17 der nicht umgedrehten Linsenelemente 2 wird nun durch die Intensitätsverteilung 17' der umgedrehten Linsenelemente kompensiert, so dass eine resultierende Intensitätsverteilung 18 entsteht, die ausgesprochen homogen ist.

Es ist erfindungsgemäß durchaus möglich, andere Formen als die in Fig. 8 abgebildete rechteckige Intensitätsverteilung 18 zu erzielen. Hier können letztlich durch die Wahl der einzelnen Linsenelemente beziehungsweise durch das Zusammenfügen von Linsenelementen aus einer Vielzahl von bereits zerschnittenen und beliebig gedrehten Substrate erzeugt werden.

Es besteht weiterhin die Möglichkeit, eine Arbeitsumgebung zu analysieren, indem die Lichtverteilung mit einem Substrat nach Einbringung der Linsenelemente 2 in der Arbeitsebene erfasst und daran anschließend analysiert werden. Anhand der Analyse kann ein Substrat aus verschiedenen geeigneten Teilen derart zusammengesetzt werden, dass eine sehr homogene Verteilung in der Arbeitsebene erzeugt werden kann. Hierbei können die Analyse und das Auswählen der zusammenzusetzenden Teile von einem entsprechend leistungsfähigen Computerprogramm ausgeführt werden.

Das zu homogenisierende Licht kann beispielsweise das Licht eines Excimerlasers oder das Licht einer Halbleiterlaservorrichtung sein.

## Patentansprüche

1. Verfahren zur Herstellung einer Vorrichtung zur Homogenisierung von Licht, wobei die Vorrichtung mindestens ein Substrat (1) mit mindestens einer optisch funktionalen Fläche mit einer Vielzahl von Linsenelementen (2) aufweist, wobei bei einem ersten Verfahrensschritt Linsenelemente (2) in mindestens einer foptisch funktionalen Fläche mindestens eines Substrates (1) ausgebildet werden, wobei in einem weiteren Verfahrensschritt das mindestens eine im ersten Verfahrensschritt mit Linsenelementen ausgetildete Substrat (1) in mindestens zwei Teile (3, 4, 6, 7, 8, 9) geteilt wird, und wobei in einem darauf folgenden Verfahrensschritt mindestens zwei der mindestens zwei Teile (3, 4, 6, 7, 8, 9) des mindestens einen im zweiten Verfahrensschritt geteilten Substrates (1) bei einer anderen Ausrichtung mindestens eines der Teile (4, 7, 9) wieder zusammengefügt werden, **dadurch gekennzeichnet, dass** die Linsenelemente (2) systematische Unregelmäßigkeiten der Oberfläche aufweisen und dass durch die andere Ausrichtung mindestens eines der mindestens zwei Teile (3, 4, 6, 7, 8, 9) verhindert werden kann, dass sich die durch die systematischen Unregelmäßigkeiten der Oberfläche hervorgerufenen Abweichungen des Lichtes nach Hindurchtritt durch die einzelnen Linsenelemente (2) der Teile (3, 4, 6, 7, 8, 9) addieren.

2. Verfahren nach Anspruch 1, **dadurch gekennzeichnet, dass** nach dem Zerteilen mindestens eines der Teile (4, 7, 9) gedreht wird, bevor es mit dem mindestens einen anderen Teil (3, 6, 8) zusammengefügt wird.

3. Verfahren nach Anspruch 2, **dadurch gekennzeichnet, dass** die Drehung eine Drehung um 180° ist.

4. Verfahren nach einem der Ansprüche 2 oder 3, **dadurch gekennzeichnet, dass** die Drehung um eine Achse erfolgt, die parallel zur mittleren Ausbreitungsrichtung (Z) des zu homogenisierenden Lichts ist.

5. Verfahren nach einem der Ansprüche 1 bis 4, **dadurch**
**gekennzeichnet, dass** das mindestens eine im ersten Verfahrensschritt mit Linsenelementen ausgetildete Substrat (1) in mehr als zwei Teile, insbesondere in vier Teile oder in acht Teile oder in sechzehn Teile oder aber auch in eine nicht einer Potenz von zwei entsprechenden Anzahl von Teilen aufgeteilt wird.

6. Verfahren nach einem der Ansprüche 1 bis 5, **dadurch gekennzeichnet, dass** das im ersten Verfahrensschritt mit Linsenelementen ausgetildete Substrat in streifenförmige Teile (6, 7, 8, 9) aufgeteilt wird, die in einer ersten Richtung (X) weniger Linsenelemente (2) aufweisen als in einer dazu senkrechten zweiten Richtung (Y).

7. Verfahren nach einem der Ansprüche 1 bis 6, **dadurch gekennzeichnet, dass** mehrere im ersten Verfahrensschritt mit Linsenelementen ausgetildete Substrate (1) in jeweils mindestens zwei Teile (3, 4, 6, 7, 8, 9) aufgeteilt werden und daran anschließend Teile unterschiedlicher Substrate zu einem neuen Substrat zusammengefügt werden.

8. Verfahren nach Anspruch 7, **dadurch gekennzeichnet, dass** vor dem Zusammenfügen eines Substrates aus Teilen unterschiedlicher Substrate die zu erzielende Intensitätsverteilung in einer Arbeitsebene analysiert wird und die Auswahl und Orientierung der für den Zusammenbau verwendeten Teile auf Basis dieser Analyse ausgewählt wird.

9. Verfahren nach einem der Ansprüche 1 bis 8, **dadurch gekennzeichnet, dass** das Aufteilen des im ersten Verfahrensschritt mit Linsenelementen ausgebildeten Substrates längs einer Begrenzungslinie erfolgt, die benachbarte Linsenelemente (2) voneinander trennt.

10. Verfahren nach einem der Ansprüche 1 bis 9, **dadurch gekennzeichnet, dass** die Aufteilung des im ersten Verfahrensschritt mit Linsenelementen ausgebildeten Substrates längs einer Ebene erfolgt, die parallel zu der Ausbreitungsrichtung (Z) des zu homogenisierenden Lichts ist.

11. Vorrichtung zur Homogenisierung von Licht, die mindestens ein Substrat (1) mit mindestens einer optisch funktionalen Fläche mit einer Vielzahl von Linsenelementen (2) aufweist, **dadurch gekennzeichnet, dass** die Vorrichtung durch ein Verfahren nach einem der Ansprüche 1 bis 10 hergestellt ist.

12. Vorrichtung nach Anspruch 11, **dadurch gekennzeichnet, dass** die Linsenelemente (2) durch Zylinderlinsen gebildet sind.

13. Vorrichtung nach Anspruch 12, **dadurch gekennzeichnet, dass** das Substrat (1) eine als Eintrittsfläche dienende optisch funktionale Fläche und eine als Austrittsfläche dienende optisch funktionale Fläche aufweist, wobei auf jeder dieser Flächen ein Array von Zylinderlinsen ausgebildet ist und wobei die Zylinderachsen des Arrays auf der Eintrittsfläche senkrecht zu den Zylinderachsen des Arrays auf der Austrittsfläche angeordnet sind.

14. Vorrichtung nach einem der Ansprüche 11 bis 13, **dadurch gekennzeichnet, dass** die Vorrichtung zwei Substrate mit mindestens zwei, insbesondere vier optisch funktionalen Flächen aufweist, wobei die beiden Substrate in Ausbreitungsrichtung (Z) des zu homogenisierenden Lichts beabstandet zueinander und hintereinander angeordnet sind.

15. Vorrichtung nach einem der Ansprüche 11 bis 14, **dadurch gekennzeichnet, dass** die Vorrichtung in Ausbreitungsrichtung des zu homogenisierenden Lichts hinter dem mindestens einen Substrat (1) angeordnete als Fourierlinse dienende Linsenmittel aufweist, die das durch einzelne Linsenelemente (2) hindurchgetretene Licht miteinander überlagern können.

## Claims

1. Method for producing an apparatus for homogenizing light, the device having at least one substrate (1) with at least one optically functional area with a multiplicity of lens elements (2), in a first method step lens elements (2) being formed in at least one optically functional area of at least one substrate (1), in a further method step the at least one substrate (1) formed with lens elements in the first method step being divided into at least two parts (3, 4, 6, 7, 8, 9), and in a method step following thereupon at least two of the at least two parts (3, 4, 6, 7, 8, 9) of the at least one substrate (1) divided in the second method step being reassembled, given another alignment of at least one of the parts (4, 7, 9), **characterized in that** the lens elements (2) have systematic irregularities in the surface, and **in that**, owing to the other alignment of at least one of the at least two parts (3, 4, 6, 7, 8, 9), it is possible to prevent the deviations of the light that are caused by the systematic irregularities in the surface from being added together after passage through the individual lens elements (2) of the parts (3, 4, 6, 7, 8, 9).

2. Method according to Claim 1, **characterized in that** after the division at least one of the parts (4, 7, 9) is rotated before it is assembled with the at least one other part (3, 6, 8).

3. Method according to Claim 2, **characterized in that** the rotation is a rotation by 180°.

4. Method according to either of Claims 2 and 3, **characterized in that** the rotation is performed about an axis that is parallel to the mean propagation direction (Z) of the light to be homogenized.

5. Method according to one of Claims 1 to 4, **characterized in that** the at least one substrate (1) formed with lens elements in the first method step is divided up into more than two parts, in particular into four parts or into eight parts or into sixteen parts, or else into a number of parts that does not correspond to a power of two.

6. Method according to one of Claims 1 to 5, **characterized in that** the substrate formed with lens elements in the first method step is divided into strip-shaped parts (6, 7, 8, 9) that have fewer lens elements (2) in a first direction (X) than in a second direction (Y) perpendicular thereto.

7. Method according to one of Claims 1 to 6, **characterized in that** a number of substrates (1) formed with lens elements in the first method step are divided up into at least two parts (3, 4, 6, 7, 8, 9) in each case, and subsequent thereto parts of different substrates are assembled to form a new substrate.

8. Method according to Claim 7, **characterized in that** before the assembly of a substrate of parts of different substrates the intensity distribution to be attained in a working plane is analyzed, and the selection and orientation of the parts used for the assembly are selected on the basis of this analysis.

9. Method according to one of Claims 1 to 8, **characterized in that** the division of the substrate formed with lens elements in the first method step is performed along a delimiting line that separates the neighboring lens elements (2) from one another.

10. Method according to one of Claims 1 to 9, **characterized in that** the division of the substrate formed with lens elements in the first method step is performed along a plane that is parallel to the propagation direction (Z) of the light to be homogenized.

11. Apparatus for homogenizing light that has at least one substrate (1) with at least one optically functional area with a multiplicity of lens elements (2), **characterized in that** the device is produced by means of a method according to one of Claims 1 to 10.

12. Apparatus according to Claim 11, **characterized in that** the lens elements (2) are formed by cylindrical lenses.

13. Apparatus according to Claim 12, **characterized in that** the substrate (1) has an optically functional area serving as entrance face, and an optically functional area serving as exit face, an array of cylindrical lenses being formed on each of these areas, and the cylinder axes of the array being arranged on the entrance face perpendicular to the cylinder axes of the array on the exit face.

14. Apparatus according to one of Claims 11 to 13, **characterized in that** the device has two substrates with at least two, in particular four optically functional areas, the two substrates being arranged in the propagation direction (Z) of the light to be homogenized in a fashion spaced apart from one another and one behind another.

15. Apparatus according to one of Claims 11 to 14, **characterized in that** in the propagation direction of the light to be homogenized the device has lens means that are arranged downstream of the at least one substrate (1), serve as a Fourier lens and can mutually superpose the light penetrating through individual lens elements (2).

## Revendications

1. Procédé de fabrication d'un dispositif d'homogénéisation de lumière, dans lequel le dispositif comporte au moins un substrat (1) avec au moins une surface optiquement fonctionnelle avec une multiplicité d'éléments de lentilles (2), dans lequel au cours d'une première étape du procédé, on forme des éléments de lentilles (2) dans au moins une surface optiquement fonctionnelle d'au moins un substrat (1), dans lequel dans une étape suivante du procédé, on divise cet au moins un substrat (1), formé d'éléments de lentilles dans la première étape du procédé, en au moins deux parties (3, 4, 6, 7, 8, 9), et dans lequel, dans une étape du procédé suivant celle-ci, au moins deux des au moins deux parties (3, 4, 6, 7, 8, 9) de cet moins un substrat (1) divisé dans la deuxième étape du procédé, sont réassemblées avec une autre orientation d'au moins une des parties (4, 7, 9),
**caractérisé en ce que** les éléments de lentilles (2) comportent des irrégularités systématiques de la surface et que l'autre orientation d'au moins une des au moins deux parties (3, 4, 6, 7, 8, 9) permet d'empêcher que les déviations de la lumière, engendrées par les irrégularités systématiques de la surface, s'additionnent après avoir traversé les éléments individuels de lentilles (2) des parties (3, 4, 6, 7, 8, 9).

2. Procédé selon la revendication 1, **caractérisé en ce qu'**on effectue une rotation d'au moins une des parties (4, 7, 9) après la division, avant de l'assembler avec au moins une autre partie (3, 6, 8).

3. Procédé selon la revendication 2, **caractérisé en ce que** la rotation est une rotation de 180°.

4. Procédé selon une des revendications 2 ou 3, **caractérisé en ce que** la rotation est effectuée autour d'un axe parallèle à la direction de propagation moyenne (Z) de la lumière à homogénéiser.

5. Procédé selon une des revendications 1 à 4, **caractérisé en ce qu'**on divise cet au moins un substrat (1), formé d'éléments de lentilles dans la première étape du procédé, en plus de deux parties, notamment en quatre parties ou en huit parties ou en seize parties ou même aussi en un nombre de parties ne correspondant pas à une puissance de deux.

6. Procédé selon une des revendications 1 à 5, **caractérisé en ce qu'**on divise le substrat, formé d'éléments de lentilles dans la première étape du procédé, en parties sous forme de bandes (6, 7, 8, 9) présentant moins d'éléments de lentilles (2) dans une première direction (X) que dans une deuxième direction (Y) qui lui est perpendiculaire.

7. Procédé selon une des revendications 1 à 6, **caractérisé en ce qu'**on divise plusieurs substrats (1) formés d'éléments de lentilles dans la première étape du procédé, respectivement en au moins deux parties (3, 4, 6, 7, 8, 9) et qu'on assemble des parties de différents substrats qui y sont adjacentes pour former un nouveau substrat.

8. Procédé selon la revendication 7, **caractérisé en ce qu'**avant d'assembler un substrat avec des parties de différents substrats, on analyse la répartition d'intensité à atteindre dans un plan de travail et on choisit la sélection et l'orientation des parties utilisées pour l'assemblage en se fondant sur cette analyse.

9. Procédé selon une des revendications 1 à 8, **caractérisé en ce que** la division du substrat formé d'éléments de lentilles dans la première étape du procédé, est effectué le long d'une ligne de séparation séparant les éléments de lentilles (2) voisins les uns des autres.

10. Procédé selon une des revendications 1 à 9, **caractérisé en ce que** la division du substrat formé d'éléments de lentilles dans la première étape du procédé, est effectuée le long d'un plan parallèle à la direction de propagation (Z) de la lumière à homogénéiser.

11. Dispositif d'homogénéisation de lumière comportant au moins un substrat (1) avec au moins une surface optiquement fonctionnelle avec une multiplicité d'éléments de lentilles (2), **caractérisé en ce que** le dispositif est fabriqué par un procédé selon une des revendications 1 à 10.

12. Dispositif selon la revendication 11, **caractérisé en ce que** les éléments de lentilles (2) sont formés de lentilles cylindriques.

13. Dispositif selon la revendication 12, **caractérisé en ce que** le substrat (1) comporte une surface optiquement fonctionnelle servant de surface d'entrée et une surface optiquement fonctionnelle servant de surface de sortie, dans lesquelles on forme sur chacune de ces surfaces, une mosaïque de lentilles cylindriques et dans lesquelles les axes des cylindres de la mosaïque sur la surface d'entrée sont disposés perpendiculairement aux axes des cylindres de la mosaïque sur la surface de sortie.

14. Dispositif selon une des revendications 11 à 13, **caractérisé en ce que** le dispositif comporte deux substrats avec au moins deux, notamment quatre surfaces optiquement fonctionnelles, les deux substrats étant disposés espacés les uns des autres et l'un derrière l'autre dans le direction de propagation (Z) de la lumière à homogénéiser.

15. Dispositif selon une des revendications 11 à 14, **caractérisé en ce que** dans la direction de propagation de la lumière à homogénéiser, le dispositif comporte des moyens de lentilles servant de lentille de Fourier disposés derrière au moins un substrat (1), qui permettent de superposer la lumière traversant des éléments individuels de lentilles (2).
